# EUROPEAN PATENT SPECIFICATION

(11) **EP 3 805 313 B1**
(45) Date of publication and mention of the grant of the patent: **03.05.2023**
(21) Application number: 19819495.3
(22) Date of filing: 31.05.2019
(51) Int. Cl.: C08L 33/08, C08K 5/12, C08F 220/18, C08K 5/00

(54) **ACRYLIC ELASTOMER COMPOSITION**
ACRYLELASTOMERZUSAMMENSETZUNG
COMPOSITION D'ÉLASTOMÈRE ACRYLIQUE

(30) Priority: 11.06.2018 JP 2018110802
(43) Date of publication of application: 14.04.2021
(73) Proprietor: Denka Company Limited, Tokyo 103-8338 (JP)
(72) Inventor: KAWASAKI, Takashi, Ichihara-city, Chiba 2908588 (JP)
(74) Representative: Hoffmann Eitle
(86) International application number: PCT/JP2019/021746
(87) International publication number: WO 2019/239922

(56) References cited:
- WO-A1-03/004563
- WO-A1-2009/099113
- WO-A1-2012/099117
- WO-A1-2014/112564
- JP-A- H07 102 119
- JP-A- 2005 120 124

## Description

### Technical Field

The present invention relates to an acrylic elastomer containing a specific plasticizer.

### Background Art

An acrylic elastomer and a vulcanizate thereof are excellent in physical properties such as heat aging resistance, oil resistance, mechanical properties, and compression permanent set properties, and thus, are commonly used as the material of a hose member or a seal member, a vibration-proofing rubber member, and the like in an engine room of an automobile.

Such members are affected by recent exhaust gas countermeasures or high output of an engine, and thus, it is desirable to improve heat resistance or to reduce compression permanent set. In addition, even in a cold area or the like, such rubber parts are used, and thus, a demand for improving cold resistance has also increased.

In general, it is known that an effect for improving cold resistance of the rubber part is obtained by blending a plasticizer with raw rubber. For this reason, in order to respond such a demand, a composition in which various plasticizers are blended with an acrylic elastomer having a balance between cold resistance and heat resistance, as a raw material, is used.

The plasticizer has a problem of bleeding out to the surface of the blended rubber part, in accordance with a usage environment of the part, and thus, it is necessary to consider a usage environment in the selection of the plasticizer. For this reason, a plasticizer capable of providing a product having improved workability and high flexibility without decreasing heat resistance has been proposed for an acrylic elastomer that is used in a part in which cold resistance and heat resistance are demanded, (for example, refer to Patent Literature 1). In addition, an acrylic elastomer composition blended with a specific polytetramethylene glycol compound has been known as an acrylic elastomer composition excellent in heat resistance (for example, refer to Patent Literature 2). Further, an acrylic rubber composition for manufacturing an elastic member that is excellent in heat resistance and is also excellent in cold resistance, flame resistance, and the like has been known (for example, refer to Patent Literature 3).

Patent Literature 4 discloses an acrylic elastomer comprising 77.5 parts by mass of ethyl acrylate, 20 parts by mass of methyl acrylate, 0.5 parts by mass of glycidyl methacrylate and 2 parts by weight ethylene. The acrylic rubber was kneaded with 3 parts by mass of a plasticizer A and crosslinked.

Patent Literature 5 discloses a rubber composition comprising pyromellitic acid esters.

Patent Literature 6 discloses an acrylic elastomer comprising 100 parts by mass of a copolymer ethylene, MMA and maleic acid monoester (5 parts by mass) and 30 parts by mass of a pyromellitate plasticizer

### Citation List

### Patent Literature

Patent Literature 1: Japanese Unexamined Patent Publication No. H7-102119
Patent Literature 2: Japanese Unexamined Patent Publication No. 2006-036826
Patent Literature 3: Japanese Unexamined Patent Publication No. 2018-16766
Patent Literature 4: WO2014/112564
Patent Literature 5: WO03/004563
Patent Literature 6: JP2005120124

### Summary of Invention

### Technical Problem

An object of the present invention is to provide an acrylic elastomer composition that becomes a vulcanizate having excellent elongation at the time of heat-resistant aging while maintaining cold resistance and compression permanent set, a vulcanizate thereof, and an industrial part using the vulcanizate.

### Solution to Problem

The present inventors have conducted intensive studies, and as a result thereof, have found that the object described above can be attained by an acrylic elastomer composition in which a pyromellitic acid ester compound as a plasticizer is contained in an acrylic elastomer, and have completed the present invention.

That is, the present invention has the following gist.
(1) An acrylic elastomer composition comprising:
   100 parts by mass of an acrylic elastomer; and
   2 to 15 parts by mass of at least one of a plasticizer represented by the chemical formula (1): 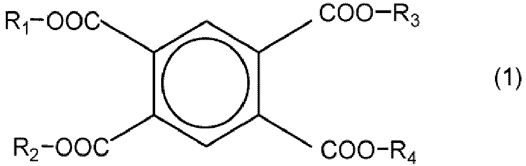
   wherein R₁, R₂, R₃, and R₄ each represent an alkyl group having 4 to 18 carbon atoms, and R₁, R₂, R₃, and R₄ may be the same alkyl group or may be different from each other, and
   wherein the acrylic elastomer comprises 0.1 to 5 parts by mass of a crosslinking monomer unit having a carboxy group with respect to 100 parts by mass of an acrylic acid alkyl ester unit.
(2) The acrylic elastomer composition according to (1), wherein the acrylic elastomer further comprises 30 parts by mass or less of an ethylene unit with respect to 100 parts by mass of the acrylic acid alkyl ester unit.
(3) The acrylic elastomer composition according to (1) or (2), wherein the acrylic acid alkyl ester unit is an acrylic acid alkyl ester unit having an alkyl group having 1 to 8 carbon atoms, and wherein the acrylic elastomer further comprises at least one selected from the group consisting of 40 parts by mass or less of a methacrylic acid alkyl ester unit having an alkyl group having 1 to 8 carbon atoms and 15 parts by mass or less of an acrylic acid alkoxy alkyl ester unit having an alkyl group having 1 to 8 carbon atoms, with respect to 100 parts by mass of the acrylic acid alkyl ester unit.
(4) The acrylic elastomer composition according to any one of (1) to (3), wherein the crosslinking monomer unit of the acrylic elastomer is at least one selected from a crosslinking monomer unit having a carboxy group and a crosslinking monomer unit having an epoxy group.
(5) The acrylic elastomer composition according to (3) or (4), wherein the methacrylic acid alkyl ester unit having an alkyl group having 1 to 8 carbon atoms is at least one selected from the group consisting of methyl methacrylate, ethyl methacrylate, n-propyl methacrylate, n-butyl methacrylate, t-butyl methacrylate, isobutyl methacrylate, n-pentyl methacrylate, isoamyl methacrylate, n-hexyl methacrylate, 2-methyl pentyl methacrylate, n-octyl methacrylate, and 2-ethylhexyl methacrylate.
(6) A vulcanizate of the acrylic elastomer composition according to any one of (1) to (5).
(7) An industrial part using the vulcanizate according to (6).

### Advantageous Effects of Invention

According to the present invention, it is possible to obtain an acrylic elastomer composition that becomes a vulcanizate having excellent elongation at the time of heat-resistant aging while maintaining cold resistance and compression permanent set, a vulcanizate thereof, and an industrial part using the vulcanizate.

### Description of Embodiments

Hereinafter, the present invention will be described in detail, but the present invention is not limited to each embodiment described below.

### <Acrylic Elastomer>

An acrylic elastomer used in the present invention is obtained by copolymerizing 100 parts by mass of acrylic acid alkyl ester, 0.1 to 5 parts by mass of a crosslinking monomer, and as necessary, ethylene, methacrylic acid alkyl ester, acrylic acid alkoxy alkyl ester, and a monomer copolymerizable therewith.

Acrylic acid alkyl ester is the skeleton of the acrylic elastomer, and it is possible to adjust basic properties such as ordinary physical properties, cold resistance, and oil resistance of an acrylic elastomer composition to be obtained by selecting the type of acrylic acid alkyl ester.

Acrylic acid alkyl ester is not particularly limited, but examples thereof include acrylic acid alkyl ester such as methyl acrylate, ethyl acrylate, n-propyl acrylate, n-butyl acrylate, t-butyl acrylate, isobutyl acrylate, n-pentyl acrylate, isoamyl acrylate, n-hexyl acrylate, 2-methyl pentyl acrylate, n-octyl acrylate, 2-ethyl hexyl acrylate, n-decyl acrylate, n-dodecyl acrylate, and n-octadecyl acrylate. Two or more of the acrylic acid alkyl esters may be used together as well as only one thereof singly. It is preferable to use methyl acrylate, ethyl acrylate, n-propyl acrylate, n-butyl acrylate, t-butyl acrylate, isobutyl acrylate, n-pentyl acrylate, isoamyl acrylate, n-hexyl acrylate, 2-methyl pentyl acrylate, n-octyl acrylate, and 2-ethyl hexyl acrylate, having an alkyl group having 1 to 8 carbon atoms, among such acrylic acid alkyl esters, since heat resistance, the cold resistance, or the oil resistance of the acrylic elastomer composition to be obtained and the vulcanizate thereof is improved. In addition, it is possible to adjust physical properties of the acrylic elastomer composition to be obtained and the vulcanizate thereof by adjusting a blended amount of such acrylic acid alkyl ester. For example, in a case where the acrylic elastomer is manufactured by using ethyl acrylate and n-butyl acrylate together, it is possible to improve the cold resistance by increasing a copolymerization ratio of n-butyl acrylate, and it is possible to improve the oil resistance by increasing a copolymerization ratio of ethyl acrylate.

Ethylene is copolymerized to improve the cold resistance of the acrylic elastomer composition to be obtained and the vulcanizate thereof and to improve compatibility with respect to a pyromellitic acid ester compound as a plasticizer described below.

A copolymerization amount of ethylene is 30 parts by mass or less, is preferably 0.5 to 20 parts by mass, and is more preferably 1 to 10 parts by mass, with respect to 100 parts by mass of acrylic acid alkyl ester. In addition, in a case where the acrylic elastomer contains methacrylic acid alkyl ester and/or acrylic acid alkoxy alkyl ester described below, the copolymerization amount of ethylene is 30 parts by mass or less (in a case where a crosslinking site is an epoxy crosslinking site: 1 to 30 parts by mass, the same applies to the following), is preferably 0 to 25 parts by mass (1 to 25 parts by mass), and is more preferably 0 to 20 parts by mass (1 to 20 parts by mass), with respect to 100 parts by mass of the total amount of acrylic acid alkyl ester, methacrylic acid alkyl ester, and acrylic acid alkoxy alkyl ester. In a case where the copolymerization amount of ethylene is greater than 30 parts by mass, the compatibility with respect to the pyromellitic acid ester compound as the plasticizer decreases, and the plasticizer easily bleeds out to the surface of the acrylic elastomer composition to be obtained and the vulcanizate thereof.

When the acrylic elastomer composition becomes the vulcanizate, the crosslinking monomer is blended in order to crosslink the molecules of acrylic acid alkyl ester, methacrylic acid alkyl ester, and acrylic acid alkoxy alkyl ester described below.

The crosslinking monomer is a compound having a carboxy group, such as an acrylic acid, a methacrylic acid, a crotonic acid, a 2-pentenoic acid, a maleic acid, a fumaric acid, an itaconic acid, and a cinnamic acid; butenedioic acid monochained alkyl ester such as monomethyl maleate, monoethyl maleate, mono-n-butyl maleate, monomethyl fumarate, monoethyl fumarate, and mono-n-butyl fumarate; butenedioic acid monoester having an alicyclic structure, such as monocyclopentyl maleate, monocyclohexyl maleate, monocyclohexenyl maleate, monocyclopentyl fumarate, monocyclohexyl fumarate, and monocyclohexenyl fumarate; and itaconic acid monoester such as monomethyl itaconate, monoethyl itaconate, mono-n-butyl itaconate, and monocyclohexyl itaconate. Due to the crosslinking monomer having a carboxy group, the heat resistance and compression permanent set of the acrylic elastomer composition to be obtained and the vulcanizate thereof are improved.

An added amount of the crosslinking monomer is preferably 0.1 to 5 parts by mass, is more preferably 0.3 to 4 parts by mass, and is even more preferably 0.5 to 3 parts by mass, with respect to 100 parts by mass of acrylic acid alkyl ester. In addition, in a case where the acrylic elastomer contains methacrylic acid alkyl ester and/or acrylic acid alkoxy alkyl ester described below, the added amount of the crosslinking monomer is preferably 0.1 to 10 parts by mass, is more preferably 0.5 to 7 parts by mass, and is even more preferably 0.5 to 5 parts by mass, with respect to 100 parts by mass of the total amount of acrylic acid alkyl ester, methacrylic acid alkyl ester, and acrylic acid alkoxy alkyl ester. In a case where the added amount of the crosslinking monomer is in such a range, the acrylic elastomer composition is effectively crosslinked, and the obtained vulcanizate is less likely to be cured and to lose rubber elasticity.

Note that, in the case of using one of the crosslinking monomer, the added amount of the crosslinking monomer is the added amount of the crosslinking monomer, and in the case of using two or more of the crosslinking monomers, the added amount of the crosslinking monomer is the total amount thereof.

The acrylic elastomer, as necessary, can be copolymerized with methacrylic acid alkyl ester or acrylic acid alkoxy alkyl ester.

Methacrylic acid alkyl ester is not particularly limited, but examples thereof include methacrylic acid alkyl ester such as methyl methacrylate, ethyl methacrylate, n-propyl methacrylate, n-butyl methacrylate, t-butyl methacrylate, isobutyl methacrylate, n-pentyl methacrylate, isoamyl methacrylate, n-hexyl methacrylate, 2-methyl pentyl methacrylate, n-octyl methacrylate, 2-ethyl hexyl methacrylate, n-decyl methacrylate, n-dodecyl methacrylate, and n-octadecyl methacrylate. Two or more of the methacrylic acid alkyl esters may be used together as well as only one thereof singly. It is preferable to use methyl methacrylate, ethyl methacrylate, n-propyl methacrylate, n-butyl methacrylate, t-butyl methacrylate, isobutyl methacrylate, n-pentyl methacrylate, isoamyl methacrylate, n-hexyl methacrylate, 2-methyl pentyl methacrylate, n-octyl methacrylate, and 2-ethyl hexyl methacrylate, having an alkyl group having 1 to 8 carbon atoms, among such methacrylic acid alkyl esters, since the heat resistance of the acrylic elastomer composition to be obtained and the vulcanizate thereof is improved.

In a case where methacrylic acid alkyl ester is copolymerized with the acrylic elastomer, an added amount of methacrylic acid alkyl ester is preferably 40 parts by mass or less, is more preferably 35 parts by mass or less, and is even more preferably 30 parts by mass or less, with respect to 100 parts by mass of acrylic acid alkyl ester. In a case where the added amount of methacrylic acid alkyl ester is in such a range, it is possible to improve the heat resistance of the acrylic elastomer composition.

Acrylic acid alkoxy alkyl ester is not particularly limited, but examples thereof include acrylic acid alkoxy alkyl ester such as 2-methoxy ethyl acrylate, 2-ethoxy ethyl acrylate, 2-(n-propoxy) ethyl acrylate, 2-(n-butoxy) ethyl acrylate, 3-methoxy propyl acrylate, 3-ethoxy propyl acrylate, 3-(n-propoxy) propyl acrylate, and 3-(n-butoxy) propyl acrylate. Two or more of the acrylic acid alkoxy alkyl esters may be used together as well as only one thereof singly.

In a case where acrylic acid alkoxy alkyl ester is copolymerized with the acrylic elastomer, an added amount of acrylic acid alkoxy alkyl ester is preferably 15 parts by mass or less, is more preferably 13 parts by mass or less, and is even more preferably 12 parts by mass or less, with respect to 100 parts by mass of acrylic acid alkyl ester. In a case where the added amount of acrylic acid alkoxy alkyl ester is in such a range, it is possible to improve the oil resistance of the acrylic elastomer composition.

The acrylic elastomer can be copolymerized with other monomers that are copolymerizable with the monomers described above, within a range not impairing the object of the present invention. The other copolymerizable monomers are not particularly limited, but examples thereof include alkyl vinyl ketone such as methyl vinyl ketone; vinyl and allyl ether such as vinyl ethyl ether and allyl methyl ether; a vinyl aromatic compound such as styrene, α-methyl styrene, chlorostyrene, vinyl toluene, and vinyl naphthalene; vinyl nitrile such as acrylonitrile and methacrylonitrile; and an ethylenically unsaturated compound such as acrylamide, propylene, butadiene, isoprene, pentadiene, vinyl acetate, vinyl chloride, vinylidene chloride, vinyl fluoride, vinylidene fluoride, and vinyl propionate.

In particular, in a case where the acrylic elastomer is copolymerized with propylene, it is preferable that propylene is 30 parts by mass or less with respect to 100 parts by mass of acrylic acid alkyl ester, and in a case where the acrylic elastomer further contains methacrylic acid alkyl ester and/or acrylic acid alkoxy alkyl ester, it is preferable that propylene is 30 parts by mass or less with respect to 100 parts by mass of the total amount of acrylic acid alkyl ester, methacrylic acid alkyl ester, and acrylic acid alkoxy alkyl ester. For example, it is possible to obtain an acrylic elastomer composition of which the cold resistance is improved, by copolymerizing propylene.

Vinyl acetate has an effect of maintaining mechanical properties such as elongation by crosslinking the molecules when the acrylic elastomer composition and the vulcanizate thereof are thermally aged, and thus, it is possible to adjust intermolecular crosslinkage of the acrylic elastomer composition to be obtained and the vulcanizate thereof by adjusting a blended amount of vinyl acetate.

In general, a main chain of the acrylic elastomer is cut by the influence of heat, an ultraviolet ray, or the like, and thus, mechanical properties such as tensile strength or breaking elongation exponentially decrease. Therefore, vinyl acetate that easily causes a crosslinking reaction is copolymerized with the main chain of the acrylic elastomer, and thus, even when the main chain of the acrylic elastomer is cut, vinyl acetate becomes a crosslinking site and is capable of crosslinking again the cut molecules.

In a case where vinyl acetate is copolymerized, vinyl acetate is 20 parts by mass or less with respect to 100 parts by mass of acrylic acid alkyl ester, and in a case where the acrylic elastomer further contains methacrylic acid alkyl ester and/or acrylic acid alkoxy alkyl ester, it is preferable that the ratio of vinyl acetate is 20 parts by mass or less with respect to 100 parts by mass of the total amount of acrylic acid alkyl ester, methacrylic acid alkyl ester, and acrylic acid alkoxy alkyl ester. In a case where a copolymerization amount of vinyl acetate is in such a range, it is possible to suppress a decrease in the mechanical properties of the acrylic elastomer composition and the vulcanizate thereof at the time of heat-resistant aging.

The acrylic elastomer can be obtained by copolymerizing the monomers described above in accordance with a known method such as emulsion polymerization, suspension polymerization, solution polymerization, and bulk polymerization.

### <Plasticizer>

The plasticizer that is used in the acrylic elastomer composition of the present invention is at least one of a pyromellitic acid ester represented by the chemical formula (1): 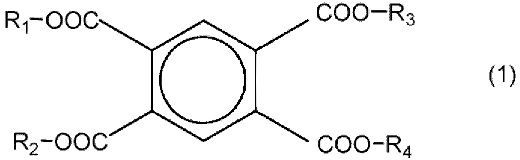 wherein R₁, R₂, R₃, and R₄ each represent an alkyl group having 4 to 18 carbon atoms, and R₁, R₂, R₃, and R₄ may be the same alkyl group or may be different from each other.

The pyromellitic acid ester compound is a compound that contains saturated aliphatic alcohol in which the number of carbon atoms is 4 to 18, and is preferably 6 to 12, and a linear chain rate is preferably 50 to 100%, and is more preferably 90% or greater, and a pyromellitic acid, as a raw material, and can be obtained by esterification according to the usual esterification method.

Examples of the alkyl group that is R₁, R₂, R₃, and R₄ include a butyl group, a pentyl group, a hexyl group, a heptyl group, an octyl group, a 2-ethyl hexyl group, a nonyl group, a decyl group, an undecyl group, a dodecyl group, a tridecyl group, a tetradecyl group, a pentadecyl group, a hexadecyl group, a heptadecyl group, and an octadecyl group. R₁, R₂, R₃, and R₄ each may be the same alkyl group, or may be different from each other, but it is preferable that all of R₁, R₂, R₃, and R₄ are the same alkyl group. Specifically, examples of a pyromellitic acid ester-based plasticizer include tetrahexyl pyromellitate, tetraheptyl pyromellitate, tetraoctyl pyromellitate, tetra(2-ethyl hexyl) pyromellitate, tetranonyl pyromellitate, tetradecyl pyromellitate, tetraisodecyl pyromellitate, tetraundecyl pyromellitate, and tetradodecyl pyromellitate. Two or more of the plasticizers may be used together as well as only one thereof singly. In a case where the number of carbon atoms of alcohol that is used as the raw material of the plasticizer is less than 4, heat aging resistance to be obtained is insufficient, and in a case where the number of carbon atoms is greater than 18, affinity with respect to the acrylic elastomer is degraded, and thus, bleedout is caused at the time of processing. In addition, in a case where the linear chain rate is less than 50%, the heat aging resistance to be obtained is insufficient.

An added amount of the plasticizer is 2 to 15 parts by mass, and is preferably 2 to 10 parts by mass, with respect to 100 parts by mass of the acrylic elastomer. In a case where the added amount of the plasticizer is less than 2 parts by mass, a plasticization effect decreases, and the cold resistance of the vulcanizate of the acrylic elastomer composition to be obtained is degraded, and in a case where the added amount of the plasticizer is greater than 15 parts by mass, the plasticizer bleeds out to the surface of the acrylic elastomer composition to be obtained or the vulcanizate thereof, and softness may excessively increase.

A plasticizer other than pyromellitic acid ester compound, as necessary, can also be used in the acrylic elastomer composition of the present invention. The plasticizer other than the pyromellitic acid ester compound may be a plasticizer that is used in the usual acrylic elastomer, and examples thereof include a polyether ester-based plasticizer, an adipic acid ether ester-based plasticizer, a polyoxyethylene ether-based plasticizer, and a trimellitate-based plasticizer. It is preferable that an added amount of such a plasticizer is in a range of 0 to 100 parts by mass with respect to 100 parts by mass of the pyromellitic acid ester-based plasticizer.

### <Acrylic Elastomer Composition>

The acrylic elastomer composition contains the acrylic elastomer and the plasticizer described above, and for example, can be the vulcanizate by adding a vulcanizing agent, a vulcanization promotor, and other additives described below, and by performing kneading at a temperature lower than or equal to a vulcanization temperature. The acrylic elastomer composition can be molded into various desired shapes, and then, can be vulcanized to be the vulcanizate, or can be vulcanized to be the vulcanizate, and then, can be molded into various shapes. The vulcanization temperature can be suitably set in accordance with the blending of the acrylic elastomer composition or the type of vulcanizing agent, and in general, the vulcanization is performed at 100 to 200°C for 1 to 10 hours. A method that is used in the vulcanization of rubber, such as hot press heating, steam heating, and oven heating, can be used as a heating method. Note that, herein, the "vulcanization" indicates that a crosslinking reaction is performed by adding a vulcanizing agent, and the vulcanizing agent may be a compound containing sulfur, or may be a compound not containing sulfur.

A device that is used in the usual acrylic elastomer can be used as a device for kneading, molding, and vulcanizing the acrylic elastomer composition and a device for kneading and molding the vulcanizate of the acrylic elastomer composition. A roll, a kneader, a Banbury mixer, an internal mixer, a biaxial extruder, and the like can be used as a kneading device.

A vulcanizing agent that is usually used in the vulcanization of the acrylic elastomer may be used as the vulcanizing agent, and the vulcanizing agent is not particularly limited, but in the case of adopting a crosslinking monomer having an epoxy group, as the crosslinking monomer, an imidazole compound is preferable, and in the case of adopting a crosslinking monomer having a carboxy group, as the crosslinking monomer, a polyvalent amine compound and a carbonate of the polyvalent amine compound are preferable, and in particular, a polyvalent amine compound having 4 to 30 carbon atoms and a carbonate thereof are more preferable. In the case of adopting a crosslinking monomer having an activated chlorine group, as the crosslinking monomer, sulfur or a sulfur donor, or a trithiocyanuric acid is preferably used. Two or more of the vulcanizing agents may be used together as well as only one thereof singly.

Examples of the imidazole compound include 1-methyl imidazole, 1,2-dimethyl imidazole, 1-methyl-2-ethyl imidazole, 1-benzyl-2-methyl imidazole, 1-benzyl-2-ethyl imidazole, 1-benzyl-2-ethyl-5-methyl imidazole, 1-benzyl-2-phenyl imidazole, 1-benzyl-2-phenyl imidazole·trimellitate, 1-aminoethyl imidazole, 1-aminoethyl-2-methyl imidazole, 1-aminoethyl-2-ethyl imidazole, 1-cyanoethyl-2-methyl imidazole, 1-cyanoethyl-2-phenyl imidazole, 1-cyanoethyl-2-ethyl-4-methyl imidazole, 1-cyanoethyl-2-undecyl imidazole, 1-cyanoethyl-2-methyl imidazole trimellitate, 1-cyanoethyl-2-phenyl imidazole trimellitate, 1-cyanoethyl-2-ethyl-4-methyl imidazole trimellitate, 1-cyanoethyl-2-undecyl-imidazole trimellitate, a 2,4-diamino-6-[2'-methyl imidazolyl-(1)']ethyl-s-triazine·isocyanuric acid adduct, 1-cyanoethyl-2-phenyl-4,5-di-(cyanoethoxy methyl) imidazole, N-(2-methyl imidazolyl-1-ethyl) urea, N,N'-bis-(2-methyl imidazolyl-1-ethyl) urea, 1-(cyanoethyl aminoethyl)-2-methyl imidazole, N,N'-[2-methyl imidazolyl-(1)-ethyl]-adipoyl diamide, N,N'-[2-methyl imidazolyl-(1)-ethyl]-dodecane dioyl diamide, N,N'-[2-methyl imidazolyl-(1)-ethyl]-eicosane dioyl diamide, 2,4-diamino-6-[2'-methyl imidazolyl-(1)']-ethyl-s-triazine, 2,4-diamino-6-[2'-undecyl imidazolyl-(1)']-ethyl-s-triazine, 1-dodecyl-2-methyl-3-benzyl imidazolium chloride, and 1,3-dibenzyl-2-methyl imidazolium chloride.

Examples of the polyvalent amine compound include an aromatic polyamine compound such as 4,4'-bis(4-aminophenoxy) biphenyl, 4,4'-diaminodiphenyl sulfide, 1,3-bis(4-aminophenoxy)-2,2-dimethyl propane, 1,3-bis(4-aminophenoxy) benzene, 1,4-bis(4-aminophenoxy) benzene, 1,4-bis(4-aminophenoxy) pentane, 2,2-bis[4-(4-aminophenoxy) phenyl] propane, 2,2-bis[4-(4-aminophenoxy) phenyl] sulfone, 4,4'-diaminodiphenyl sulfone, bis(4-3-aminophenoxy) phenyl sulfone, 2,2-bis[4-(4-aminophenoxy) phenyl] hexafluoropropane, 3,4'-diaminodiphenyl ether, 4,4'-diaminodiphenyl ether, 4,4'-diaminobenzanilide, and bis[4-(4-aminophenoxy) phenyl] sulfone, and an aliphatic polyamine compound such as hexamethylene diamine, hexamethylene diamine carbamate, N,N'-dicinnamylidene-1,6-hexane diamine, diethylene triamine, triethylene tetramine, and tetraethylene pentamine.

Examples of the sulfur donor include dipentamethylene thiuram hexasulfide and triethyl thiuram disulfide.

The vulcanization promotor is not particularly limited, but in the case of adopting a polyvalent amine compound or a carbonate thereof, as the vulcanizing agent, an aliphatic monovalent secondary amine compound, an aliphatic monovalent tertiary amine compound, a guanidine compound, an imidazole compound, a quaternary onium salt, a tertiary phosphine compound, a weakly acidic alkali metal salt, a diazabicycloalkene compound, and the like are preferable.

In the case of adopting the imidazole compound as the vulcanizing agent, a thiourea compound, a quaternary onium salt, and the like are preferable.

In the case of adopting sulfur or the sulfur donor, or the trithiocyanuric acid, as the vulcanizing agent, a carboxylic acid alkali metal salt, a thiazole compound, a thiuram compound, and a dithiocarbamate are preferable.

In order to adjust a vulcanization rate, a curing agent of an epoxy resin, for example, a pyrolytic ammonium salt, an organic acid, an acid anhydride, amines, sulfur and a sulfur compound, and the like may be added to the vulcanization promoter, within a range not impairing the effects of the present invention.

Examples of the aliphatic monovalent secondary amine compound include dimethyl amine, diethyl amine, di-n-propyl amine, diallyl amine, diisopropyl amine, di-n-butyl amine, di-t-butyl amine, di-sec-butyl amine, dihexyl amine, diheptyl amine, dioctyl amine, dinonyl amine, didecyl amine, diundecyl amine, didodecyl amine, ditridecyl amine, ditetradecyl amine, dipentadecyl amine, dicetyl amine, di-2-ethyl hexyl amine, dioctadecyl amine, di-cis-9-octadecenyl amine, and dinonadecyl amine.

Examples of the aliphatic monovalent tertiary amine compound include trimethyl amine, triethyl amine, tri-n-propyl amine, triallyl amine, triisopropyl amine, tri-n-butyl amine, tri-t-butyl amine, tri-sec-butyl amine, tripentyl amine, trihexyl amine, triheptyl amine, trioctyl amine, trinonyl amine, tridecyl amine, triundecyl amine, tridodecyl amine, tridecyl amine, tritetradecyl amine, tripentadecyl amine, tricetyl amine, tri-2-ethyl hexyl amine, trioctadecyl amine, tri-cis-9-octadecenyl amine, trinonadecyl amine, N,N-dimethyl decyl amine, N,N-dimethyl dodecyl amine, N,N-dimethyl tetradecyl amine, N,N-dimethyl cetyl amine, N,N-dimethyl octadecyl amine, N,N-dimethyl behenyl amine, N-methyl didecyl amine, N-methyl didodecyl amine, N-methyl ditetradecyl amine, N-methyl dicetyl amine, N-methyl dioctadecyl amine, N-methyl dibehenyl amine, and dimethyl cyclohexyl amine.

Examples of the guanidine compound include 1,3-di-o-tolyl guanidine and 1,3-diphenylguanidine.

Examples of the imidazole compound include 2-methyl imidazole and 2-phenyl imidazole.

The quaternary onium salt is not particularly limited, but examples thereof include an ammonium salt such as tetra-n-butyl ammonium chloride, trimethyl phenyl ammonium chloride, trimethyl stearyl ammonium chloride, trimethyl lauryl ammonium chloride, trimethyl cetyl ammonium chloride, dimethyl distearyl ammonium chloride, tributyl benzyl ammonium chloride, tetra-n-butyl ammonium bromide, methyl triphenyl ammonium bromide, ethyl triphenyl ammonium bromide, trimethyl phenyl ammonium bromide, trimethyl benzyl ammonium bromide, trimethyl stearyl ammonium bromide, and tetrabutyl ammonium thiocyanate, and a phosphonium salt such as tetra-n-butyl phosphonium chloride, tetra-n-butyl phosphonium bromide, methyl triphenyl phosphonium bromide, ethyl triphenyl phosphonium bromide, butyl triphenyl phosphonium bromide, hexyl triphenyl phosphonium bromide, benzyl triphenyl phosphonium bromide, tetraphenyl phosphonium chloride, tetraphenyl phosphonium bromide, 4-butoxy benzyl triphenyl phosphonium bromide, allyl tributyl phosphonium chloride, 2-propynyl triphenyl phosphonium bromide, and methoxy propyl tributyl phosphonium chloride.

Examples of the tertiary phosphine compound include triphenyl phosphine and tri-p-tolyl phosphine.

Examples of the weakly acidic alkali metal salt include an inorganic weak acid salt such as a phosphate and a carbonate of sodium and potassium, and an organic weak acid salt such as a stearate and a laurate of sodium and potassium.

Examples of the diazabicycloalkene compound include 1,8-diazabicyclo[5.4.0] undecene-7 (DBU), 1,5-diazabicyclo[4.3.0] nonene-5 (DBN), and 1,4-diazabicyclo[2.2.2] octane (DABCO). In addition, such diazabicycloalkene compounds may form a salt, and examples of the compound forming a salt include a hydrochloric acid, a sulfuric acid, a carboxylic acid, a sulfonic acid, and phenol. Examples of the carboxylic acid include an octylic acid, an oleic acid, a formic acid, an orthophthalic acid, and an adipic acid. In addition, examples of the sulfonic acid include a benzene sulfonic acid, a toluene sulfonic acid, a dodecyl benzene sulfonic acid, and a naphthalene sulfonic acid. Two or more of these compounds may be used together as well as only one thereof singly.

Examples of the thiourea compound include N,N'-diphenyl thiourea, N,N-diethyl thiourea, N,N-dibutyl thiourea, N,N'-diorthotolyl thiourea, and trimethyl thiourea.

Examples of the carboxylic acid alkali metal salt include sodium stearate, potassium stearate, sodium laurate, and potassium laurate, and examples of the thiazole compound include mercaptobenzothiazole and dibenzothiazyl disulfide.

Examples of the thiuram-based promotor include tetraethyl thiuram disulfide and tetrabutyl thiuram disulfide. The dithiocarbamate-based promotor is selected from a zinc salt, a copper salt, an iron salt, and a tellurium salt of dithiocarbamic acids, and among them, the zinc salt is preferable, and examples of the zinc salt include zinc diethyl dithiocarbamate and zinc dibutyl dithiocarbamate.

An added amount of the vulcanizing agent is not particularly limited, but is preferably 0.1 to 15 parts by mass, is more preferably 0.1 to 10 parts by mass, and is even more preferably 0.2 to 5 parts by mass, with respect to 100 parts by mass of the acrylic elastomer. According to such a range, it is possible to perform a necessary and sufficient vulcanization treatment.

An added amount of the vulcanization promoter is preferably 0.1 to 20 parts by mass, is more preferably 0.2 to 15 parts by mass, and is even more preferably 0.3 to 10 parts by mass, with respect to 100 parts by mass of the acrylic elastomer. According to such a range, it is possible to perform a necessary and sufficient vulcanization treatment.

A filler, a stiffener, a plasticizer, a lubricant, an age inhibitor, a stabilizer, a silane coupling agent, a polyfunctional monomer, and the like may be added to the acrylic elastomer, in accordance with the purpose for practical use.

A filler and a stiffener that are used in the usual acrylic elastomer can be added as the filler and the stiffener, and examples of the filler and the stiffener include a filler and a stiffener such as carbon black, acetylene black, silica, clay, talc, calcium carbonate, antimony trioxide, and aluminum hydroxide. An added amount of such additives is preferably in a range of 20 to 100 parts by mass, and is more preferably 20 to 80 parts by mass, in total, with respect to 100 parts by mass of the acrylic elastomer.

A polyfunctional monomer that is used in the usual acrylic elastomer can be added as the polyfunctional monomer, and examples of the polyfunctional monomer include triallyl cyanurate, triallyl isocyanurate, and trimethylol propane triacrylate. An added amount of the polyfunctional monomer is preferably in a range of 1 to 10 parts by mass with respect to 100 parts by mass of the acrylic elastomer.

The vulcanizate of the present invention is used as an industrial part, and in particular, is preferably used as a rubber hose; a seal part of a gasket, packing, or the like; a vibration-proofing rubber part; and the like.

Examples of the rubber hose include a transmission oil cooler hose, an engine oil cooler hose, an air duct hose, a turbo intercooler hose, a hot air hose, a radiator hose, a power steering hose, a hose for a fuel system, and a hose for a drain system of an automobile, a construction machine, a hydraulic machine, and the like.

As the configuration of the rubber hose, a reinforcing thread or a wire may be provided in the middle of the hose, or may be provided on the outermost layer of the rubber hose, as generally performed.

Examples of the seal part include an engine head cover gasket, an oil pan gasket, an oil seal, lip seal packing, an O-ring, a transmission seal gasket, a crankshaft, a camshaft seal gasket, a valve stem, a power steering seal belt cover seal, and a boot material and a rack-and-pinion boot material for a constant-velocity joint.

Examples of the vibration-proofing rubber part include a damper pulley, a center support cushion, and a suspension bush.

### Examples

Hereinafter, the present invention will be described in more detail, on the basis of examples, but the present invention is not limited thereto.

11 types of acrylic elastomers A to K were prepared in the following conditions.

### <Manufacturing of Acrylic Elastomer A>

17 kg of an aqueous solution of partially saponified polyvinyl alcohol of 4 mass%, and 56 g of sodium formaldehyde sulfoxylate were put in a pressure-resistant reaction vessel having an inner volume of 40 liters, and were mixed well in advance with a stirrer, and thus, a homogeneous suspension liquid was prepared. The upper air in a bath was substituted with nitrogen, and then, ethylene was injected into the upper portion of the bath, and a pressure was adjusted to 3 MPa Stirring was continuously performed, and the bath was retained at 55°C, and then, 7 kg of ethyl acrylate, 3 kg of n-butyl acrylate, 500 g of mono-n-butyl maleate, and an aqueous solution of t-butyl hydroperoxide of 0.5 mass% were respectively injected from a separate injection port, and polymerization was initiated. The temperature of the bath was retained at 55°C during a reaction, and the reaction was performed until a polymerization conversion rate reached 95%.

20 kg of an aqueous solution of sodium borate of 0.3 mass% was added to a polymerization liquid, a polymer was solidified, and dewatering and drying were performed, and thus, an acrylic elastomer A was obtained. The acrylic elastomer A had a copolymer composition of 70 parts by mass of an ethyl acrylate unit, 30 parts by mass of an n-butyl acrylate unit, 2 parts by mass of an ethylene unit, and 2 parts by mass of a mono-n-butyl maleate unit. Such monomer components were respectively quantified by a nuclear magnetic resonance spectral method.

### <Manufacturing of Acrylic Elastomer B>

An acrylic elastomer B was obtained in the same conditions as those of the acrylic elastomer A, except that the blending of the monomer component that is a raw material of the acrylic elastomer was changed to 7 kg of ethyl acrylate, 3 kg of n-butyl acrylate, and 200 g of glycidyl methacrylate.

The acrylic elastomer B had a copolymer composition of 70 parts by mass of an ethyl acrylate unit, 30 parts by mass of an n-butyl acrylate unit, 2 parts by mass of an ethylene unit, and 1.6 parts by mass of a glycidyl methacrylate unit. Note that, in the acrylic elastomer B, and acrylic elastomers C, D, E, F, G, H, I, J, and K described below, monomer unit components other than glycidyl methacrylate were quantified by the same method as that of the acrylic elastomer A. Glycidyl methacrylate was quantified by dissolving the obtained acrylic elastomer (before vulcanization) in chloroform, in accordance with a titrimetric method using a perchloric acid-acetic acid solution.

### <Manufacturing of Acrylic Elastomer C>

An acrylic elastomer C was obtained in the same conditions as those of the acrylic elastomer A, except that the blending of the monomer component that is a raw material of the acrylic elastomer was changed to 4 kg of ethyl acrylate, 5 kg of n-butyl acrylate, 1 kg of methyl methacrylate, and 500 g of mono-n-butyl maleate.

The acrylic elastomer C had a copolymer composition of 40 parts by mass of an ethyl acrylate unit, 50 parts by mass of an n-butyl acrylate unit, 10 parts by mass of a methyl methacrylate unit, 2 parts by mass of an ethylene unit, and 2 parts by mass of a mono-n-butyl maleate unit.

### <Manufacturing of Acrylic Elastomer D>

17 kg of an aqueous solution of partially saponified polyvinyl alcohol of 4 mass% and 56 g of sodium formaldehyde sulfoxylate were put in a pressure-resistant reaction vessel having an inner volume of 40 liters, and were mixed well in advance with a stirrer, and thus, a homogeneous suspension liquid was prepared. The upper air in a bath was substituted with nitrogen. Stirring was continuously performed, and the bath was retained at 55°C, and then, 7.5 kg of n-butyl acrylate, 2.5 kg of methyl methacrylate, 500 g of mono-n-butyl maleate, and an aqueous solution of t-butyl hydroperoxide of 0.5 mass% were respectively put from a separate injection port, and polymerization was initiated. The temperature of the bath was retained at 55°C during a reaction, and the reaction was performed until a polymerization conversion rate reached 95%.

20 kg of an aqueous solution of sodium borate of 0.3 mass% was added to a polymerization liquid, a polymer was solidified, and dewatering and drying were performed, and thus, an acrylic elastomer D was obtained. The acrylic elastomer D had a copolymer composition of 75 parts by mass of an n-butyl acrylate unit, 25 parts by mass of a methyl methacrylate unit, and 2 parts by mass of a mono-n-butyl maleate unit.

### <Manufacturing of Acrylic Elastomer E>

An acrylic elastomer E was obtained in the same conditions as those of the acrylic elastomer D, except that the blending of the monomer component that is a raw material of the acrylic elastomer was changed to 7 kg of ethyl acrylate, 2 kg of n-butyl acrylate, 1 kg of methoxy ethyl acrylate, and 500 g of mono-n-butyl maleate.

The acrylic elastomer E had a copolymer composition of 70 parts by mass of an ethyl acrylate unit, 20 parts by mass of an n-butyl acrylate unit, 10 parts by mass of a methoxy ethyl acrylate, and 2 parts by mass of a mono-n-butyl maleate unit.

### <Manufacturing of Acrylic Elastomer F>

An acrylic elastomer F was obtained in the same conditions as those of the acrylic elastomer A, except that the blending of the monomer component that is a raw material of the acrylic elastomer was changed to 7 kg of ethyl acrylate, 3 kg of n-butyl acrylate, and 250 g of mono-n-butyl maleate.

The acrylic elastomer F had a copolymer composition of 70 parts by mass of an ethyl acrylate unit, 30 parts by mass of an n-butyl acrylate unit, 2 parts by mass of an ethylene unit, and 1.0 part by mass of a mono-n-butyl maleate unit.

### <Manufacturing of Acrylic Elastomer G>

An acrylic elastomer G was obtained in the same conditions as those of the acrylic elastomer A, except that the blending of the monomer component that is a raw material of the acrylic elastomer was changed to 7 kg of ethyl acrylate, 3 kg of n-butyl acrylate, and 1 kg of mono-n-butyl maleate.

The acrylic elastomer G had a copolymer composition of 70 parts by mass of an ethyl acrylate unit, 30 parts by mass of an n-butyl acrylate unit, 2 parts by mass of an ethylene unit, and 4 parts by mass of a mono-n-butyl maleate unit.

### <Manufacturing of Acrylic Elastomer H>

An acrylic elastomer H was obtained in the same conditions as those of the acrylic elastomer A, except that ethylene was injected into the upper portion of the bath, and the pressure was changed to 6 MP a.

The acrylic elastomer H had a copolymer composition of 70 parts by mass of an ethyl acrylate unit, 30 parts by mass of an n-butyl acrylate unit, 5 parts by mass of an ethylene unit, and 2 parts by mass of a mono-n-butyl maleate unit.

### <Manufacturing of Acrylic Elastomer I>

An acrylic elastomer I was obtained in the same conditions as those of the acrylic elastomer D, except that the blending of the monomer component that is a raw material of the acrylic elastomer was changed to 7 kg of ethyl acrylate, 3 kg of n-butyl acrylate, and 500 g of mono-n-butyl maleate.

The acrylic elastomer I had a copolymer composition of 70 parts by mass of an ethyl acrylate unit, 30 parts by mass of an n-butyl acrylate unit, and 2 parts by mass of a mono-n-butyl maleate unit.

### <Manufacturing of Acrylic Elastomer J>

An acrylic elastomer J was obtained in the same conditions as those of the acrylic elastomer A, except that the blending of the monomer component that is a raw material of the acrylic elastomer was changed to 7 kg of ethyl acrylate and 3 kg of n-butyl acrylate.

The acrylic elastomer J had a copolymer composition of 70 parts by mass of an ethyl acrylate unit, 30 parts by mass of an n-butyl acrylate unit, and 2 parts by mass of an ethylene unit.

### <Manufacturing of Acrylic Elastomer K>

An acrylic elastomer K was obtained in the same conditions as those of the acrylic elastomer A, except that the blending of the monomer component that is a raw material of the acrylic elastomer was changed to 7 kg of ethyl acrylate, 3 kg of n-butyl acrylate, and 1.5 kg of mono-n-butyl maleate.

The acrylic elastomer K had a copolymer composition of 70 parts by mass of an ethyl acrylate unit, 30 parts by mass of an n-butyl acrylate unit, 2 parts by mass of an ethylene unit, and 7 parts by mass of a mono-n-butyl maleate unit.

The acrylic elastomers A to K and other materials were kneaded at the blending of Table 1 to Table 3 by using an 8-inch open roll, and thus, acrylic elastomer compositions of Examples 1 to 16 and Comparative Examples 1 to 9 were obtained. Such acrylic elastomer compositions (unvulcanized) were molded to have a thickness of 2 mm, and were subjected to a heating treatment at 170°C × 20 minutes with a hot press to be a primary vulcanizate, and then, were subjected to a heating treatment at 170°C × 4 hours with hot air (a gear oven), and thus, a vulcanizate of the acrylic elastomer was obtained.

**[Table 1]**

| | | | | Example | | | | | | | |
|---|---|---|---|---|---|---|---|---|---|---|---|
| | | | | 1 | 2 | 3 | 4 | 5 | 6 | 7 | 8 |
| Acrylic elastomer composition | | Type | - | A | A | A | A | A | A | A | B |
| | | Acrylic elastomer | Parts by mass | 100 | 100 | 100 | 100 | 100 | 100 | 100 | 100 |
| | | Acrylic rubber | | | - | - | - | - | - | - | - |
| | | Lubricant A | | 1 | 1 | 1 | 1 | 1 | 1 | 1 | 1 |
| | | Lubricant B | | 1 | 1 | 1 | 1 | 1 | 1 | 1 | 1 |
| | | Age inhibitor | | 1 | 1 | 1 | 1 | 1 | 1 | 1 | 1 |
| | | Carbon black A | | 50 | 55 | 65 | 55 | 60 | 60 | - | 55 |
| | | Carbon black B | | - | - | - | - | - | - | 55 | - |
| | | Plasticizer A | | 2 | 5 | 15 | - | 7 | 7 | 5 | 5 |
| | | Plasticizer B | | - | - | - | 5 | - | - | - | - |
| | | Plasticizer C | | - | - | - | - | 3 | - | - | - |
| | | Plasticizer D | | - | - | - | - | - | 3 | - | - |
| | | Plasticizer E | | - | - | - | - | - | - | - | - |
| | | Plasticizer F | | - | - | - | - | - | - | - | - |
| | | Vulcanizing agent A | | 0.6 | 0.6 | 0.6 | 0.6 | 0.3 | 0.6 | 0.6 | - |
| | | Vulcanizing agent B | | - | - | - | - | - | - | - | 0.4 |
| | | Vulcanization promotor A | | 1 | 1 | 1 | 1 | 1 | 1 | 1 | - |
| | | Vulcanization promotor B | | - | - | - | - | - | - | - | 0.5 |
| | | Vulcanization promotor C | | - | - | - | - | - | - | - | 0.5 |
| Evaluation | Ordinary physical properties of secondary vulcanizate | Tensile strength | MPa % Shore A | 11.5 | 11.0 | 9.2 | 11.3 | 9.9 | 10.1 | 10.5 | 10.2 |
| | | Elongation at break | | 280 | 291 | 304 | 282 | 293 | 295 | 326 | 363 |
| | | Hardness | | 62 | 62 | 57 | 61 | 61 | 62 | 66 | 63 |
| | Heat aging resistance 190°C × 360 hrs | Tensile strength | MPa % Shore A | 6.5 | 6.1 | 4.2 | 6.5 | 6.6 | 6.5 | 6.5 | 7.4 |
| | | Elongation at break | | 130 | 145 | 135 | 114 | 111 | 110 | 206 | 101 |
| | | Hardness | | 83 | 83 | 85 | 86 | 87 | 89 | 82 | 92 |
| | Compression permanent set 150°C × 70 hrs | | % | +13 | +12 | +12 | +13 | +13 | +14 | +13 | +31 |
| | Cold resistance | t100 | °C | -28 | -30 | -33 | -30 | -33 | -31 | -33 | -31 |

**[Table 2]**

| | | | | Example | | | | | | | |
|---|---|---|---|---|---|---|---|---|---|---|---|
| | | | | 9 | 10 | 11 | 12 | 13 | 14 | 15 | 16 |
| Acrylic elastomer composition | | Type | - | C | C | D | E | F | G | H | I |
| | | Acrylic elastomer | Parts by mass | 100 | 100 | 100 | 100 | 100 | 100 | 100 | 100 |
| | | Acrylic rubber | | - | - | - | - | - | - | - | - |
| | | Lubricant A | | 1 | 1 | 1 | 1 | 1 | 1 | 1 | 1 |
| | | Lubricant B | | 1 | 1 | 1 | 1 | 1 | 1 | 1 | 1 |
| | | Age inhibitor | | 1 | 1 | 1 | 1 | 1 | 1 | 1 | 1 |
| | | Carbon black A | | 55 | - | 55 | 55 | 55 | 55 | 55 | 55 |
| | | Carbon black B | | - | 55 | - | - | - | - | - | - |
| | | Plasticizer A | | 5 | 5 | 5 | 5 | 5 | 5 | 5 | 5 |
| | | Plasticizer B | | - | - | - | - | - | - | - | - |
| | | Plasticizer C | | - | - | - | - | - | - | - | - |
| | | Plasticizer D | | - | - | - | - | - | - | - | - |
| | | Plasticizer E | | - | - | - | - | - | - | - | - |
| | | Plasticizer F | | - | - | - | - | - | - | - | - |
| | | Vulcanizing agent A | | 0.6 | 0.6 | 0.6 | 0.6 | 0.3 | 0.6 | 0.6 | 0.6 |
| | | Vulcanizing agent B | | - | - | - | - | - | - | - | - |
| | | Vulcanization promotor A | | 1 | 1 | 1 | 1 | 1 | 1 | 1 | 1 |
| | | Vulcanization promotor B | | - | - | - | - | - | - | - | - |
| | | Vulcanization promotor C | | - | - | - | - | - | - | - | - |
| Evaluation | Ordinary physical properties of secondary vulcanizate | Tensile strength | MPa % Shore A | 11.0 | 10.6 | 9.2 | 10.1 | 8.1 | 11.8 | 11.1 | 10.9 |
| | | Elongation at break | | 316 | 398 | 299 | 317 | 410 | 249 | 285 | 295 |
| | | Hardness | | 67 | 68 | 66 | 63 | 61 | 62 | 62 | 62 |
| | Heat aging resistance 190°C × 360 hrs | Tensile strength | MPa % Shore A | 3.3 | 3.1 | 4.0 | 8.5 | 3.5 | 6.1 | 6.3 | 6.1 |
| | | Elongation at break | | 296 | 337 | 350 | 117 | 135 | 115 | 138 | 145 |
| | | Hardness | | 82 | 82 | 82 | 88 | 81 | 89 | 82 | 82 |
| | Compression permanent set 150°C × 70 hrs | | % | +16 | +17 | +19 | +22 | +24 | +10 | +12 | +12 |
| | Cold resistance | t100 | °C | -30 | -30 | -26 | -32 | -30 | -30 | -32 | -29 |

**[Table 3]**

| | | | | Comparative Example | | | | | | | | |
|---|---|---|---|---|---|---|---|---|---|---|---|---|
| | | | | 1 | 2 | 3 | 4 | 5 | 6 | 7 | 8 | 9 |
| Acrylic elastomer composition | | Type | - | A | A | A | A | J | K | A | Commercially available product | Commercially available product |
| | | Acrylic elastomer | Parts by mass | 100 | 100 | 100 | 100 | 100 | 100 | 100 | - | - |
| | | Acrylic rubber | | - | - | - | - | - | - | - | 100 | 100 |
| | | Lubricant A | | 1 | 1 | 1 | 1 | 1 | 1 | 1 | 1 | 1 |
| | | Lubricant B | | 1 | 1 | 1 | 1 | 1 | 1 | 1 | 1 | 1 |
| | | Age inhibitor | | 1 | 1 | 1 | 1 | 1 | 1 | 1 | 1 | 1 |
| | | Carbon black A | | 55 | 55 | 55 | 55 | 55 | 55 | 70 | 45 | 45 |
| | | Carbon black B | | - | - | - | - | - | - | - | - | - |
| | | Plasticizer A | | - | - | - | - | 5 | 5 | 20 | 5 | - |
| | | Plasticizer B | | - | - | - | - | - | - | - | - | - |
| | | Plasticizer C | | 5 | - | - | - | - | - | - | - | 5 |
| | | Plasticizer D | | - | 5 | - | - | - | - | - | - | - |
| | | Plasticizer E | | - | - | 5 | - | - | - | - | - | - |
| | | Plasticizer F | | - | - | - | 5 | - | - | - | - | - |
| | | Vulcanizing agent A | | 0.6 | 0.6 | 0.6 | 0.6 | 0.6 | 0.6 | 0.6 | 2 | 2 |
| | | Vulcanizing agent B | | - | - | - | - | - | - | - | - | - |
| | | Vulcanization promotor A | | 1 | 1 | 1 | 1 | 1 | 1 | 1 | 4 | 4 |
| | | Vulcanization promotor B | | - | - | - | - | - | - | - | - | - |
| | | Vulcanization promotor C | | - | - | - | - | - | - | - | - | - |
| Evaluation | Ordinary physical properties of secondary vulcanizate | Tensile strength | MPa % Shore A | 11.0 | 10.9 | 10.9 | 10.9 | Not vulcanized | 11.8 | Bleed out | 17.7 | 17.2 |
| | | Elongation at break | | 280 | 270 | 282 | 271 | | 229 | | 415 | 406 |
| | | Hardness | | 62 | 64 | 62 | 62 | | 62 | | 65 | 65 |
| | Heat aging resistance 190°C × 360 hrs | Tensile strength | MPa % Shore A | 6.3 | 6.7 | 6.4 | 6.8 | Not measurable | Cured | | 7.7 | 7.9 |
| | | Elongation at break | | 83 | 76 | 77 | 76 | | | | 33 | 27 |
| | | Hardness | | 88 | 91 | 90 | 90 | | | | 88 | 90 |
| | Compression permanent set 150°C × 70 hrs | | % | +16 | +15 | +15 | +16 | | +12 | | +14 | +15 |
| | Cold resistance | t100 | °C | -33 | -30 | -31 | -30 | | -30 | | -33 | -35 |

Blended reagents used in Table 1 to Table 3 are as follows.
· Acrylic Rubber: VAMAC-G (Copolymer of 40 Mass% of Ethylene and 60 Mass% of Methyl Acrylate), manufactured by DuPont
· Lubricant A: Stearic Acid, manufactured by Tokyo Chemical Industry Co., Ltd.
· Lubricant B: Liquid Paraffin, manufactured by KANEDA Co., Ltd
· Age Inhibitor: NOCRAC CD, manufactured by OUCHI SHINKO CHEMICAL INDUSTRIAL CO., LTD.
· Carbon Black A: SEAST #116, manufactured by TOKAI CARBON CO., LTD.
· Carbon Black B: DENKA BLACK, manufactured by Denka Company Limited
· Plasticizer A: ADK CIZER UL-100 (Pyromellitic Acid-Mixed Linear Alkyl Ester (Mixture of Tetrahexyl Pyromellitate and tetradecyl Pyromellitate)), manufactured by ADEKA Corporation
· Plasticizer B: ADK CIZER UL-80 (Tetra(2-Ethyl Hexyl) Pyromellitate), manufactured by ADEKACorporation
· Plasticizer C: ADK CIZER RS-735 (Polyether Ester-Based), manufactured by ADEKA Corporation
· Plasticizer D: ADK CIZER C-8 (Trimellitic Acid 2-Ethyl Hexyl Ester), manufactured by ADEKA Corporation
· Plasticizer E: ADK CIZER C-880 (Trimellitic Acid-Mixed Linear Alkyl Ester), manufactured by ADEKACorporation
· Plasticizer F: ADK CIZER C-9N (Trimellitic Acid Isononyl Ester), manufactured by ADEKACorporation
· Vulcanizing Agent A: Diak #1 (Hexamethylene Diamine Carbamate), manufactured by DuPont
· Vulcanizing Agent B: 1-Benzyl-2-Methyl Imidazole, manufactured by Tokyo Chemical Industry Co., Ltd.
· Vulcanization Promotor A: NOCCELER DT (1,3-Di-O-Tolyl Guanidine), manufactured by OUCHI SHINKO CHEMICAL INDUSTRIAL CO., LTD.
· Vulcanization Promotor B: Trimethyl Thiourea, manufactured by Tokyo Chemical Industry Co., Ltd.
· Vulcanization Promotor C: Trimethyl Stearyl Ammonium Bromide, manufactured by Tokyo Chemical Industry Co., Ltd.
"VAMAC", "NOCRAC", "SEAST", "DENKA BLACK", "ADK CIZER", and "NOCCELER" are Registered Trademarks.

The obtained vulcanizate (a test piece) was evaluated in the following conditions.
(1) Tensile Strength/Elongation at Break
   Measurement was performed by using a dumbbell-shaped No. 3 type, on the basis of JIS (2017) K6251.
(2) Hardness
   Measurement was performed by using a durometer hardness meter type A, on the basis of JIS (2017) K6253-3.
(3) Cold Resistance Test
   The temperature of t₁₀₀ was measured on the basis of JIS (2017) K6261.
(4) Heat Aging Resistance Test
   Tensile strength and elongation at break of the test piece after a heat treatment at 190°C × 360 hours were measured on the basis of JIS (2017) K6257. In a case where it is satisfied that the elongation at break after a heat aging resistance test is greater than or equal to 100%, the vulcanizate can be used for a hose part and a seal part, and in a case where it is further satisfied that the elongation at break is greater than or equal to 110%, the vulcanizate can preferably be used for such parts.
(5) Compression Permanent Set
   Measurement was performed by performing a heat treatment at a compression rate of 25% and 150°C × 70 hours, on the basis of JIS (2017) K6262.

As obvious from Table 1 to Table 3, in the acrylic elastomer composition of the present invention, the vulcanizate having excellent elongation at the time of heat-resistant aging while maintaining the cold resistance and the compression permanent set was obtained.

### Industrial Applicability

In the composition of the present invention, the vulcanizate having excellent elongation at the time of heat-resistant aging while maintaining the cold resistance and the compression permanent set can be obtained, and the vulcanizate can be preferably used as an industrial part such as a hose part, a seal part, and a vibration-proofing rubber part.

## Claims

1. An acrylic elastomer composition comprising:
100 parts by mass of an acrylic elastomer; and
2 to 15 parts by mass of at least one of a plasticizer represented by the chemical formula (1): 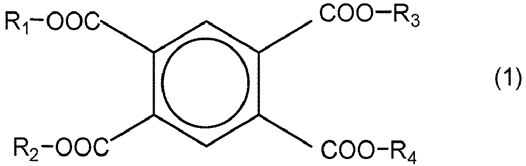
wherein R₁, R₂, R₃, and R₄ each represent an alkyl group having 4 to 18 carbon atoms, and R₁, R₂, R₃, and R₄ may be the same alkyl group or may be different from each other, and
wherein the acrylic elastomer comprises 0.1 to 5 parts by mass of a crosslinking monomer unit having a carboxy group with respect to 100 parts by mass of an acrylic acid alkyl ester unit.

2. The acrylic elastomer composition according to claim 1,
wherein the acrylic elastomer further comprises 30 parts by mass or less of an ethylene unit with respect to 100 parts by mass of the acrylic acid alkyl ester unit.

3. The acrylic elastomer composition according to claim 1 or 2,
wherein the acrylic acid alkyl ester unit is an acrylic acid alkyl ester unit having an alkyl group having 1 to 8 carbon atoms, and
wherein the acrylic elastomer further comprises at least one selected from the group consisting of 40 parts by mass or less of a methacrylic acid alkyl ester unit having an alkyl group having 1 to 8 carbon atoms and 15 parts by mass or less of an acrylic acid alkoxy alkyl ester unit having an alkyl group having 1 to 8 carbon atoms, with respect to 100 parts by mass of the acrylic acid alkyl ester unit.

4. The acrylic elastomer composition according to claim 3,
wherein the methacrylic acid alkyl ester unit having an alkyl group having 1 to 8 carbon atoms is at least one selected from the group consisting of methyl methacrylate, ethyl methacrylate, n-propyl methacrylate, n-butyl methacrylate, t-butyl methacrylate, isobutyl methacrylate, n-pentyl methacrylate, isoamyl methacrylate, n-hexyl methacrylate, 2-methyl pentyl methacrylate, n-octyl methacrylate, and 2-ethyl hexyl methacrylate.

5. A vulcanizate of the acrylic elastomer composition according to any one of claims 1 to 4.

6. An industrial part using the vulcanizate according to claim 5.

## Patentansprüche

1. Eine Acrylelastomer-Zusammensetzung, umfassend:
100 Masseteile eines Acrylelastomers; und
2 bis 15 Masseteile von mindestens einem Weichmacher mit der chemischen Formel (1): 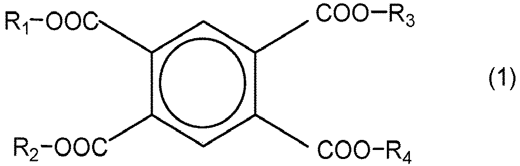
worin R₁, R₂, R₃ und R₄ jeweils eine Alkylgruppe mit 4 bis 18 Kohlenstoffatomen darstellen, und R₁, R₂, R₃ und R₄ die gleiche Alkylgruppe sein können oder voneinander verschieden sein können, und
wobei das Acrylelastomer 0,1 bis 5 Masseteile einer vernetzenden Monomereinheit mit einer Carboxygruppe, bezogen auf 100 Masseteile einer Acrylsäurealkylestereinheit, umfasst.

2. Acrylelastomer-Zusammensetzung gemäß Anspruch 1,
wobei das Acrylelastomer ferner 30 Masseteile oder weniger einer Ethyleneinheit, bezogen auf 100 Masseteile der Acrylsäurealkylestereinheit, umfasst.

3. Acrylelastomer-Zusammensetzung gemäß Anspruch 1 oder 2,
wobei die Acrylsäurealkylestereinheit eine Acrylsäurealkylestereinheit mit einer Alkylgruppe mit 1 bis 8 Kohlenstoffatomen ist, und
wobei das Acrylelastomer ferner mindestens einen Vertreter umfasst, ausgewählt aus der Gruppe bestehend aus 40 Masseteilen oder weniger einer Methacrylsäurealkylestereinheit mit einer Alkylgruppe mit 1 bis 8 Kohlenstoffatomen und 15 Masseteilen oder weniger einer Acrylsäurealkoxyalkylestereinheit mit einer Alkylgruppe mit 1 bis 8 Kohlenstoffatomen, bezogen auf 100 Masseteile der Acrylsäurealkylestereinheit.

4. Acrylelastomer-Zusammensetzung gemäß Anspruch 3,
wobei die Methacrylsäurealkylestereinheit mit einer Alkylgruppe mit 1 bis 8 Kohlenstoffatomen mindestens eine ist, ausgewählt aus der Gruppe ausgewählt bestehend aus Methylmethacrylat, Ethylmethacrylat, n-Propylmethacrylat, n-Butylmethacrylat, t-Butylmethacrylat, Isobutylmethacrylat, n-Pentylmethacrylat, Isoamylmethacrylat, n-Hexylmethacrylat, 2-Methylpentylmethacrylat, n-Octylmethacrylat und 2-Ethylhexylmethacrylat.

5. Vulkanisat der Acrylelastomer-Zusammensetzung gemäß mindestens einem der Ansprüche 1 bis 4.

6. Industrielles Teil, welches das Vulkanisat gemäß Anspruch 5 verwendet.

## Revendications

1. Composition d'élastomère acrylique comprenant :
100 parties en masse d'un élastomère acrylique ; et
de 2 à 15 parties en masse d'au moins l'un d'un plastifiant représenté par la formule chimique (1) : 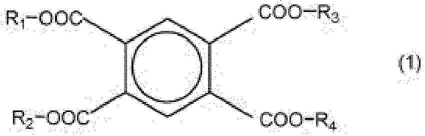
dans laquelle R₁, R₂, R₃ et R₄ représentent chacun un groupe alkyle ayant de 4 à 18 atomes de carbone, et R₁, R₂, R₃ et R₄ peuvent être le même groupe alkyle ou peuvent être différents les uns des autres, et
dans laquelle l'élastomère acrylique comprend de 0,1 à 5 parties en masse d'une unité monomère de réticulation ayant un groupe carboxy par rapport à 100 parties en masse d'une unité ester alkylique d'acide acrylique.

2. Composition d'élastomère acrylique selon la revendication 1,
dans laquelle l'élastomère acrylique comprend en outre 30 parties en masse ou moins d'une unité éthylène par rapport à 100 parties en masse de l'unité ester alkylique d'acide acrylique.

3. Composition d'élastomère acrylique selon la revendication 1 ou la revendication 2,
dans laquelle l'unité ester alkylique d'acide acrylique est une unité ester alkylique d'acide acrylique ayant un groupe alkyle ayant de 1 à 8 atomes de carbone, et
dans laquelle l'élastomère acrylique comprend en outre au moins un choisi dans le groupe constitué de 40 parties en masse ou moins d'une unité ester alkylique d'acide méthacrylique ayant un groupe alkyle ayant 1 à 8 atomes de carbone et 15 parties en masse ou moins d'une unité ester d'alcoxy alkyle d'acide d'acrylique ayant un groupe alkyle ayant de 1 à 8 atomes de carbone, par rapport à 100 parties en masse de l'unité ester alkylique d'acide acrylique.

4. Composition d'élastomère acrylique selon la revendication 3,
dans laquelle l'unité ester alkylique d'acide méthacrylique ayant un groupe alkyle ayant de 1 à 8 atomes de carbone est au moins un choisi dans le groupe constitué par le méthacrylate de méthyle, le méthacrylate d'éthyle, le méthacrylate de n-propyle, le méthacrylate de n-butyle, le méthacrylate de t-butyle, le méthacrylate d'isobutyle, le méthacrylate de n-pentyle, le méthacrylate d'isoamyle, le méthacrylate de n-hexyle, le méthacrylate de 2-méthyl pentyle, le méthacrylate de n-octyle et le méthacrylate de 2-éthyl hexyle.

5. Vulcanisat de la composition d'élastomère acrylique selon l'une quelconque des revendications 1 à 4.

6. Pièce industrielle utilisant le vulcanisat selon la revendication 5.
